(19)

Europäisches
Patentamt
European
Patent Office
Office européen
des brevets

(11) **EP 4 782 173 A1**

(12) **EUROPEAN PATENT APPLICATION**
published in accordance with Art. 153(4) EPC

(43) Date of publication:
**29.07.2026 Bulletin 2026/31**

(21) Application number: **23952968.8**

(22) Date of filing: **19.09.2023**

(51) International Patent Classification (IPC):
**B29C 39/10** (2006.01)   **B29C 69/00** (2006.01)
**B29C 65/52** (2006.01)

(52) Cooperative Patent Classification (CPC):
**B29C 39/10; B29C 65/52; B29C 69/00**

(86) International application number:
**PCT/JP2023/033848**

(87) International publication number:
**WO 2025/062475 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Kokoku Intech Co., Ltd.**
**Taito-ku**
**Tokyo 110-0015 (JP)**

(72) Inventors:
• **MORI Keisuke**
  **Utsunomiya-shi, Tochigi 321-0905 (JP)**
• **HIRAYAMA Kouji**
  **Utsunomiya-shi, Tochigi 321-0905 (JP)**

(74) Representative: **Balder IP Law, S.L.**
**Paseo de la Castellana 93**
**5ª planta**
**28046 Madrid (ES)**

(54) **BONDING METHOD AND BONDED OBJECT**

(57)     There are provided a bonding method and a bonded object that can reduce man-hours during bonding and reduce the squeeze-out of an adhesive without requiring strict control of the amount of adhesive or a load to improve bonding strength. A bonding method includes: an application step, a forming step, or a placement step; and a setting step and a processing step of setting first and second base materials 210 and 220 on first and second molds 110 and 120 such that a portion on which an adhesive 300 has been applied, formed, or placed is positioned at recesses 114 and 124 and pressurizing the first and second base materials 210 and 220 with the first and second molds 110 and 120. The first base material 210 is deformed due to the adhesive 300 in the recess 114 to form a protrusion 212 protruding toward the recess 114, the second base material 220 is deformed due to the adhesive 300 in the recess 124 to form a protrusion 222 protruding toward the recess 124, and a void formed by the protrusions 212 and 222 is filled with the adhesive 300.

FIG. 5

## Description

TECHNICAL FIELD

The present invention relates to a bonding method and a bonded object.

BACKGROUND ART

In the related art, a method using molds (for example, see Patent Document 1) is provided as a bonding method of bonding two objects to be bonded (hereinafter referred to as base materials). For example, an adhesive is applied to a position on one base material where bonding is intended (hereinafter referred to as a bonding portion), the base material is aligned with the other base material, and the two base materials are then pressurized and held by molds, so that a product in which the two base materials are bonded to each other (hereinafter referred to as a bonded product) is obtained. In the method in the related art, there is a problem that a required thickness of the adhesive is not obtained and the adhesive is easily peeled off since the adhesive spreads during the pressurization. Accordingly, it is necessary to strictly control the load applied to the molds and the amount of the adhesive. For this reason, in a case where, for example, thick base materials having a thickness exceeding 1 mm are used, a method that includes performing grooving or the like on one base material in advance to form a groove portion and applying an adhesive into the groove portion is used. Further, in a case where, for example, thin base materials having a thickness of 0.1 mm or less are used, a method that includes performing drawing or the like on one base material in advance to form a surrounding portion and applying an adhesive into the surrounding portion is used. The squeeze-out of the adhesive during the pressurization and holding using the molds is prevented in this manner.

CITATION LIST

PATENT DOCUMENT

Patent Document 1: Japanese Unexamined Patent Publication No. 2002-347123

SUMMARY OF THE INVENTION

PROBLEM TO BE SOLVED BY THE INVENTION

However, man-hours are required for grooving, drawing, or the like in the method of forming the groove portion or the surrounding portion on one base material in advance. Further, in order to prevent the adhesive from squeezing out from the groove portion or the surrounding portion, ultimately, it is necessary to control the amount of the adhesive and the load during processing with high accuracy. In a case where the amount of the adhesive is smaller than a required amount or a case where pressurization is low, the lack of material occurs in the bonding portion. As a result, there is a concern that sufficient strength may not be obtained. On the contrary, in a case where the amount of the adhesive is larger than the required amount of the adhesive or a case where pressurization is high, there is a concern that the adhesive may leak out to form burrs or internal pressure during molding may be increased to cause cracks of the base material.

The present invention has been made in view of the above circumstances, and an exemplary object of the present invention is to provide a bonding method and a bonded object that can reduce man-hours during bonding and reduce the squeeze-out of an adhesive without requiring strict control of the amount of adhesive or a load to improve bonding strength.

MEANS FOR SOLVING THE PROBLEM

In order to achieve the object, a bonding method as an exemplary aspect of the present invention has the following configuration.

A bonding method of interposing an adhesive between a first bonding surface of a first base material and a second bonding surface of a second base material and interposing and pressurizing the first base material and the second base material between a first mold and a second mold facing the first mold to bond the first base material and the second base material, the first mold including a first recess, and the second mold including a second recess at a position facing the first recess, the bonding method comprising:

a first step of applying, forming, or placing the adhesive on the first bonding surface or the second bonding surface; and
a second step of setting the first base material on the first mold and setting the second base material on the second mold such that a portion on which the adhesive has been applied, formed, or placed is positioned at the first recess and the second recess and pressurizing the first base material and the second base material with the first mold and the second mold,
wherein the first base material is deformed due to the adhesive in the first recess to form a first protrusion protruding toward the first recess,
the second base material is deformed due to the adhesive in the second recess to form a second protrusion protruding toward the second recess, and
a void formed by the first protrusion and the second protrusion is filled with the adhesive.

A bonding method as another exemplary aspect of the present invention has the following configuration.

A bonding method of interposing an adhesive between a first bonding surface of a first base material and a second bonding surface of a second base material and interposing and pressurizing the first base material and the second base material between a first mold and a second mold facing the first mold to bond the first base material and the second base material, the first mold including a recess, the bonding method comprising:

a first step of applying, forming, or placing the adhesive on the first bonding surface or the second bonding surface; and

a second step of setting the first base material on the first mold and setting the second base material on the second mold such that a portion on which the adhesive has been applied, formed, or placed is positioned at the recess and pressurizing the first base material and the second base material with the first mold and the second mold,

wherein the first base material is deformed due to the adhesive in the recess to form a protrusion protruding toward the recess, and

a void formed by the protrusion is filled with the adhesive.

In order to achieve the above object, a bonded object as an exemplary aspect of the present invention has the following configuration.

A bonded object comprising:

a first base material including a first bonding surface;
a second base material including a second bonding surface; and
an adhesive that bonds the first bonding surface and the second bonding surface at least partially,
wherein the first base material includes a first protrusion that is deformed due to the adhesive to protrude from a surface of the first base material opposite to the first bonding surface, and/or
the second base material includes a second protrusion that is deformed due to the adhesive to protrude from a surface of the second base material opposite to the second bonding surface, and
a void formed by the first protrusion and/or the second protrusion is filled with the adhesive.

Further objects or other features of the present invention will become apparent from preferred embodiments to be described below with reference to accompanying drawings.

ADVANTAGEOUS EFFECTS OF THE INVENTION

According to the present invention, it is possible to provide a bonding method and a bonded object that can reduce man-hours during bonding and reduce the squeeze-out of an adhesive without requiring strict control of the amount of adhesive or a load to improve bonding strength.

BRIEF DESCRIPTION OF THE DRAWINGS

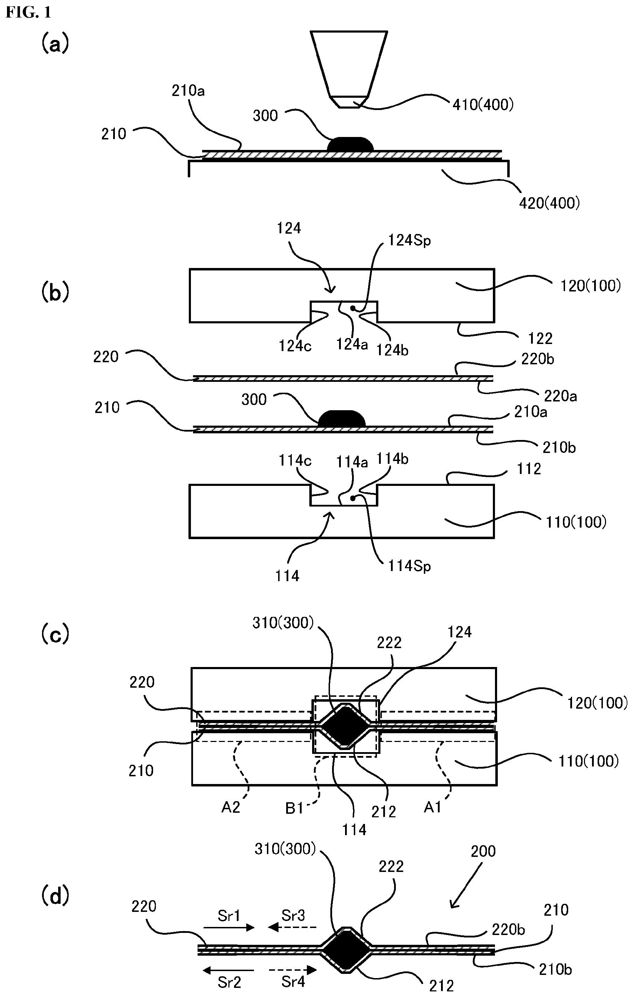

Figs. 1A to 1D are schematic diagrams showing a bonding method for a base material according to a first embodiment, in which Fig. 1A is a schematic diagram showing an application step of applying an adhesive to a base material, Fig. 1B is a schematic diagram showing a pressurizing apparatus that bonds two base materials, Fig. 1C is a schematic diagram showing an aspect in which the two base materials are pressurized and held by molds, and Fig. 1D is a schematic diagram showing an aspect in which the bonded base materials are taken out;

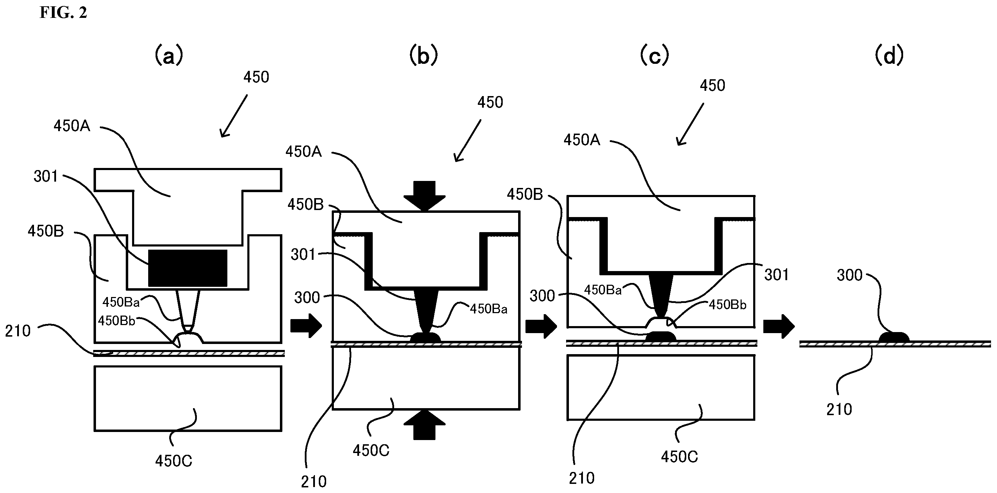

Figs. 2A to 2D are diagrams showing an aspect in which an adhesive is formed by injection forming methods of first to fifth embodiments;

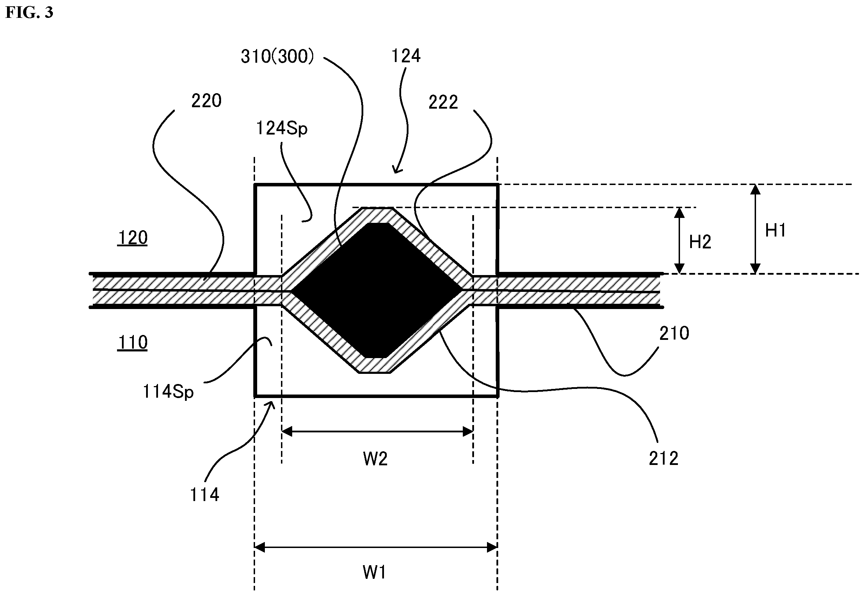

Fig. 3 is a diagram illustrating a relationship between recesses of the molds and protrusions of the base materials of the first embodiment;

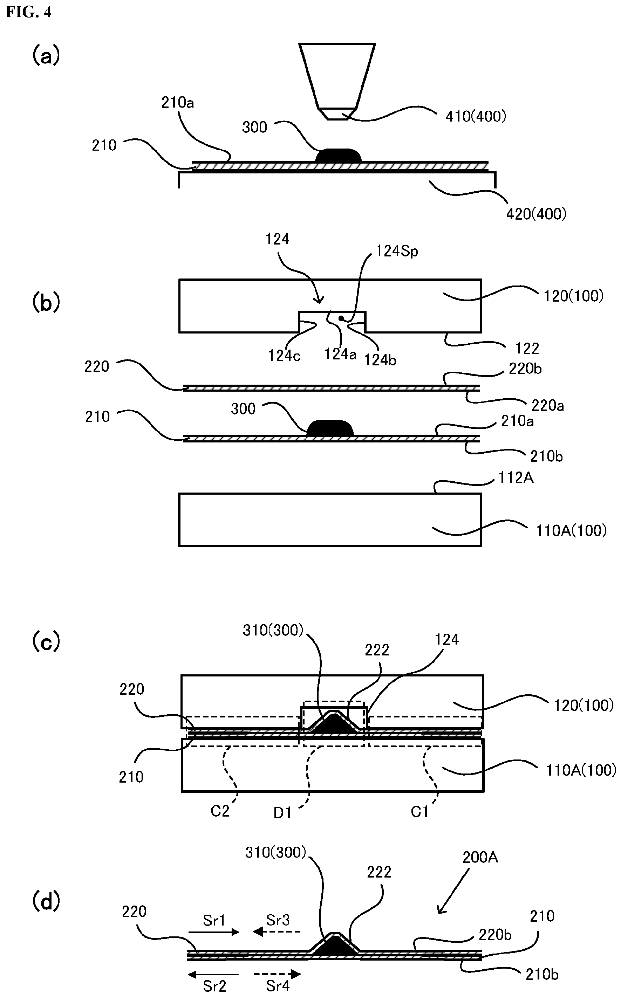

Figs. 4A to 4D are schematic diagrams showing a bonding method for a base material according to a second embodiment, in which Fig. 4A is a schematic diagram showing an application step of applying an adhesive to a base material, Fig. 4B is a schematic diagram showing a pressurizing apparatus that bonds two base materials, Fig. 4C is a schematic diagram showing an aspect in which the two base materials are pressurized and held by molds, and Fig. 4D is a schematic diagram showing an aspect in which the bonded base materials are taken out;

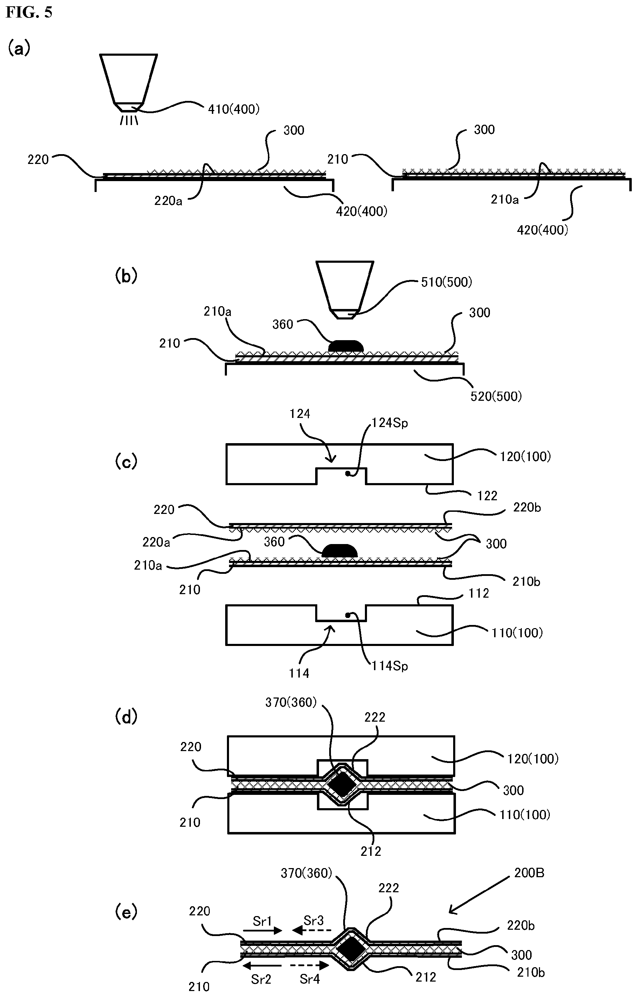

Figs. 5A to 5E are schematic diagrams showing a bonding method for a base material according to a third embodiment, in which Fig. 5A is a schematic diagram showing a first application step of applying an adhesive to base materials, Fig. 5B is a schematic diagram showing a second application step of applying a binder to the base material, Fig. 5C is a schematic diagram showing an aspect in which the two base materials are bonded to each other, Fig. 5D is a schematic diagram showing an aspect in which the two base materials are pressurized and held by molds, and Fig. 5E is a schematic diagram showing an aspect in which the bonded base materials are taken out; and

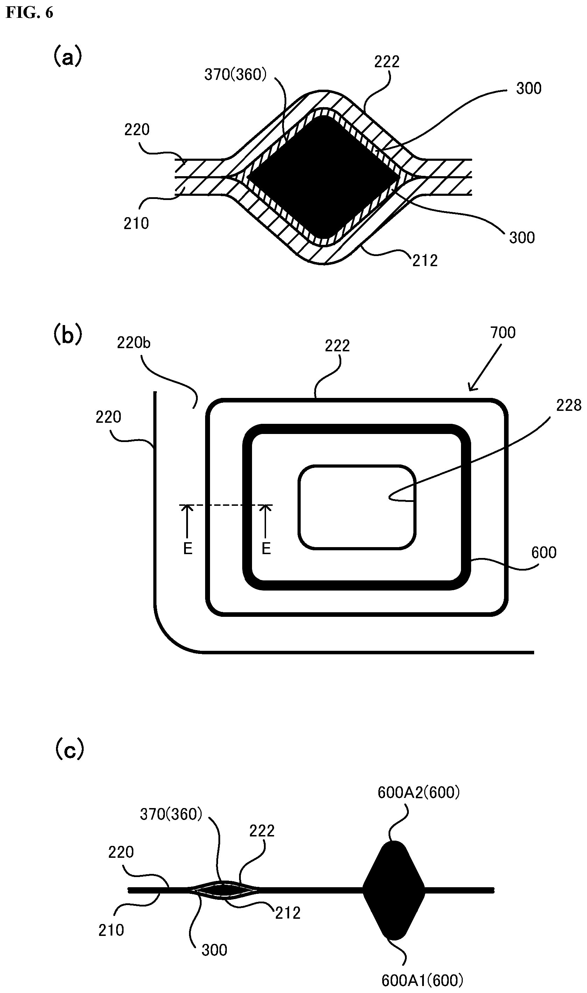

Fig. 6A is an enlarged view of a bonding portion at which the base materials are bonded to each other by the bonding method according to the third embodiment in a fourth embodiment, Fig. 6B is a schematic diagram showing a molded article in a case where the bonding of the two base materials is performed together with the processing of seal members, and Fig. 6C is a cross-sectional view taken along line E-E of Fig. 6B.

DESCRIPTION OF THE EMBODIMENTS

Hereinafter, embodiments will be described with reference to the drawings. Herein, "forming" refers to a step of shaping rubber, a resin, or an adhesive without being accompanied by a curing (cross-linking) reaction regardless of the use of a mold, and "molding" refers to a step of shaping rubber, a resin, or an adhesive using molds heated to, for example, 150°C to 200°C while being accompanied by a curing (cross-linking) reaction. Further, a position (portion) at which two base materials are desired to be bonded to each other (required to be bonded to each other) refers to a bonding portion.

[First embodiment]

In a first embodiment, a method including interposing an adhesive between a first bonding surface of a first base material and a second bonding surface of a second base material and interposing and pressurizing the first base material and the second base material between a first mold and a second mold facing the first mold to bond the first base material and the second base material will be described.

<Base material, adhesive, and mold>

Figs. 1A to 1D are schematic diagrams showing the bonding method for a base material according to the first embodiment. Fig. 1A is a schematic diagram showing an application step of applying an adhesive to a base material, Fig. 1B is a schematic diagram showing a pressurizing apparatus that bonds two base materials, Fig. 1C is a schematic diagram showing an aspect in which the two base materials are pressurized and held by molds, and Fig. 1D is a schematic diagram showing an aspect in which the bonded base materials are taken out.

The bonding method according to the first embodiment is performed using an application apparatus 400 and a pressurizing apparatus 100. Here, an adhesive 300 is applied to a first base material 210 by the application apparatus 400, and the first base material 210 and a second base material 220 are bonded to each other by the pressurizing apparatus 100.

(Base material)

The first and second base materials 210 and 220, which are bonded objects, are formed of a material highly resistant to deformation, such as a thin metal plate or a resin film, and have a thickness of, for example, 0.1 mm or less. Meanwhile, as long as the first base material 210 and the second base material 220 are formed of a material highly resistant to deformation, the first base material 210 and the second base material 220 may have a thickness exceeding 0.1 mm. The first and second base materials 210 and 220 do not include materials susceptible to brittle fracture, such as ceramics or glass.

The first base material 210 has a surface 210a that is a first bonding surface to which the adhesive 300 is applied, and a surface 210b opposite to the surface 210a. The second base material 220 has a surface 220a that is a second bonding surface to which the adhesive 300 is applied, and a surface 220b opposite to the surface 220a.

(Adhesive)

The adhesive 300 is made of a material that can bond to the first and second base materials 210 and 220. Further, the adhesive 300 is made of a material that has a viscosity allowing a shape, which is obtained when the material is applied, to be maintained when being applied to the first base material 210. For this reason, the adhesive 300 does not include a material having a viscosity not allowing a shape, which is obtained when the material is applied, to be maintained.

(Mold)

The pressurizing apparatus 100 of the first embodiment includes a first mold 110 and a second mold 120. Each of the first mold 110 and the second mold 120 includes a portion having a recessed shape. As shown in Fig. 1B, a recess 114, which is a first recess (or a recess) having a recessed shape, is provided on a surface 112 of the first mold 110 facing the second mold 120 when the cross-sections of the first mold 110 and the second mold 120 taken in a vertical direction are viewed. The recess 114 is formed by a bottom surface 114a, a wall surface 114b connecting the bottom surface 114a and the surface 112, and a wall surface 114c facing the wall surface 114b, so that a space 114Sp is formed. The cross-section of the recess 114 is formed in a U shape in the first embodiment. However, as long as the recess 114 has a shape in which the deformed first base material 210 to be described later is received in the space 114Sp formed by the recess 114, the cross-section of the recess 114 is not limited to the U-shaped cross-section and may be a curved cross-section.

Further, a recess 124, which is a second recess (or a recess) having a recessed shape, is provided at a position facing the recess 114 on a surface 122 of the second mold 120 facing the first mold 110. The recess 124 is formed by a bottom surface 124a, a wall surface 124b connecting the bottom surface 124a and the surface 122, and a wall surface 124c facing the wall surface 124b, so that a space 124Sp is formed. The recess 124 also has a U-shaped cross-sectional shape as in the recess 114, but the cross-sectional shape of the recess 124 is not limited to the U shape.

Meanwhile, the lengths of the recesses 114 and 124 in a direction orthogonal to the plane of paper in Fig. 1B, in other words, the length of the bonding portion in the direction orthogonal to the plane of paper may be determined according to the use of the first and second base materials 210 and 220. Furthermore, when viewed in a direction orthogonal to the surface 112 of the first mold 110 and the surface 122 of the second mold 120, the recesses 114 and 124 are not limited to extending in a linear shape and may be formed in any shape according to the use of the first and second base materials 210 and 220.

For example, as shown in Fig. 6B to be described later, a protrusion 222 of the second base material 220 to be described later forms a line in which straight lines and curves are combined. As described above, the recesses 114 and 124 corresponding to a protrusion 212 (see Fig. 6C) and a protrusion 222 may be formed on the surface 112 of the first mold 110 and the surface 122 of the second mold 120.

<Bonding method>

The bonding method according to the first embodiment is performed by the application apparatus 400 and the pressurizing apparatus 100, and includes an application step, a setting step, a pressurizing step, and a taking-out step. A bonding method using the deformation of the base material caused by an adhesive will be described in the first embodiment.

(Application step, forming step, or placement step)

As shown in Fig. 1A, the application step, which is a first step of applying the adhesive 300 onto the surface 210a or 220a, is performed using the application apparatus 400. The application apparatus 400 includes a nozzle 410 and a table 420. The nozzle 410 discharges the adhesive 300, which is stored in the application apparatus 400, downward. The table 420 holds the first base material 210 that has been positioned. The first base material 210 is accurately positioned and placed on the table 420 so that bonding is accurately performed at a predetermined position.

The nozzle 410 discharges the adhesive 300 onto the surface 210a of the first base material 210 positioned on the table 420. Meanwhile, the application apparatus 400 may be configured such that any one or both of the nozzle 410 and the table 420 are movable in a plane (hereinafter referred to as a horizontal plane) orthogonal to the vertical direction. Accordingly, required lines are drawn on the first and second base materials 210 and 220 with the adhesive 300 so that the protrusions 212 and 222 shown in Figs. 6A to 6C can be formed.

Meanwhile, the application apparatus 400 shown in Fig. 1A is merely an example, and an application method for the adhesive 300 may be performed using, for example, a spray gun, a dispenser, a coater, a printer, injection forming using a mold, or the like. Further, the placement (simple setting) of an adhesive used in a method that does not use the application apparatus or the mold, for example, a hot-melt adhesive processed into a sheet or film form or a film including an adhesive formed on both surfaces thereof may be performed. In this case, the bonding method includes a placement step of placing the adhesive on the base material as a first step. As described above, the bonding method according to the first embodiment includes the application step of applying the adhesive or the placement step of placing the adhesive. Hereinafter, the adhesive will be described as being applied in the application step.

(Injection forming)

Figs. 2A to 2D are diagrams showing a method of forming (bonding) the adhesive 300 using injection forming instead of the application method using the application apparatus 400 shown in Fig. 1A. A forming apparatus 450 for the adhesive 300 shown in Figs. 2A to 2C includes molds 450A, 450B, and 450C. The mold 450B is provided with a gate 450Ba and a recess 450Bb. As shown in Fig. 2A, an adhesive or binder 301 is placed between the molds 450A and 450B and the first base material 210 is placed between the molds 450B and 450C. As shown in Fig. 2B, the adhesive or binder 301 is injected from the gate 450Ba into the recess 450Bb on the first base material 210 by the pressurization of the forming apparatus 450, so that the adhesive 300 is formed on the first base material 210. When the molds 450A and 450B are separated from the mold 450C, that is, the molds are opened as shown in Fig. 2C, the first base material 210 with the adhesive 300 bonded (formed) thereon as shown in Fig. 2D can be obtained. Meanwhile, the method shown in Figs. 2A to 2D may be used instead of an application method using an application apparatus 400 shown in Fig. 4A or an application apparatus 500 shown in Fig. 5B to be described later.

(Setting step)

Next, the setting step of setting the first base material 210 on the first mold 110 and setting the second base material 220 on the second mold 120 such that a portion to which the adhesive 300 has been applied is positioned at the recesses 114 and 124 will be described. As shown in Fig. 1B, the first and second base materials 210 and 220 are accurately positioned and set in the pressurizing apparatus 100. The first base material 210 to which the adhesive 300 has been applied is placed on the surface 112 of the first mold 110 such that the position of the adhesive 300 is accurately aligned with the positions of the recess 114 of the first mold 110 and the recess 124 of the second mold 120. In addition, the second base material 220 is accurately positioned and placed on the first base material 210 to which the adhesive 300 has been applied. The positioning of the first and second base materials 210 and 220 relative to the first mold 110 may be performed by, for example, a method of fitting pilot pins (not shown) provided on the first mold 110 into holes (not shown) that are provided in advance in the first and second base materials 210 and 220, or the like, or may be performed through the recognition of the positions using a camera or the like.

(Pressurizing step)

Next, the pressurizing step of pressurizing the first and second base materials 210 and 220 with the first and second molds 110 and 120 will be described. In this state, the first and second base materials 210 and 220 are pressurized and held by the first and second molds 110 and 120.

Here, as shown in Fig. 1C, the first and second base materials 210 and 220 include portions A1 and A2 that are to be pressurized by the first and second molds 110 and 120 and are shown by a broken line and a portion B1 that is not to be pressurized due to the recesses 114 and 124 and is shown by a broken line. The portion B1 is positioned in advance such that a portion to which the adhesive 300 has been applied is positioned at the portion B1, and is in a state where the adhesive 300 is interposed between the first and second base materials 210 and 220. Meanwhile, at the portion B1, a side of the first base material 210 or the second base material 220 on which the adhesive 300 is present refers to an inner side, and a side of the first base material 210 or the second base material 220 on which the adhesive 300 is not present refers to an outer side.

Since the first and second base materials 210 and 220 are not in contact with the first and second molds 110 and 120 at the portion B1 before the deformation of the first and second base materials 210 and 220, the flow of the adhesive 300 in the portion B1 in the vertical direction in the plane of paper caused by pressurization is not obstructed. On the other hand, since the portions A1 and A2 that have been pressurized are present, the flow of the adhesive in a horizontal direction in the plane of paper is constrained. The first and second base materials 210 and 220 are deformed by the flow of the adhesive 300, which is accompanied by anisotropy, at at least a part of the portion B1 and form a protrusion 212 that is a first protrusion (or a protrusion) protruding toward the outer side, and a protrusion 222 that is a second protrusion (or a protrusion) protruding toward the outer side. Meanwhile, at the portion B1, after the deformation of the first and second base materials 210 and 220, the first base material 210 may or may not be in contact with the first mold 110, and likewise, the second base material 220 may or may not be in contact with the second mold 120. Whether or not the first base material 210 and the first mold 110 are in contact with each other and the second base material 220 and the second mold 120 are in contact with each other after the deformation depends on the amount of the adhesive 300 filled inside.

Fig. 3 is a diagram illustrating a relationship between the recess 114 of the first mold 110 and the protrusion 212 of the first base material 210 and between the recess 124 of the second mold 120 and the protrusion 222 of the second base material 220 in the first embodiment. Here, the widths of the recesses 114 and 124 are denoted by W1 and the heights of the recesses 114 and 124 are denoted by H1. The widths of the protrusions 212 and 222 having deformed by the flow of the adhesive 300 are denoted by W2 and the heights of the protrusions 212 and 222 having deformed by the flow of the adhesive 300 are denoted by H2. Meanwhile, the width of each of the protrusions 212 and 222 is defined as a distance from a position where the deformation of each of the first and second base materials 210 and 220 start to a position where the deformation ends, when the cross-section of each of the protrusions taken in a direction in which the bonding portion extends (a direction orthogonal to the plane of paper) is viewed. Further, the heights are based on the surface 210b of the first base material 210 or the surface 220b of the second base material 220 as a reference, but other positions may be used as the reference as long as the heights H1 and H2 can be measured from the same reference.

In this case, the recess 114 of the first mold 110 and the recess 124 of the second mold 120 are formed to satisfy the following relationships:

$$W1 \geq W2$$

$$H1 \geq H2$$

Meanwhile, since base materials formed of the same material are used as the first and second base materials 210 and 220, the extents to which the protrusions 212 and 222 protrude are substantially the same.

Since the above-described relationships are satisfied, the first and second molds 110 and 120 can prevent the adhesive 300 from squeezing out into a portion not requiring the adhesive 300 without obstructing the deformation of the first and second base materials 210 and 220. Since the protrusions 212 and 222 are filled with the adhesive 300, the protrusions 212 and 222 serve as an adhesive reservoir 310.

(Taking-out step)

As shown in Fig. 1D, the first and second base materials 210 and 220 bonded to each other by the adhesive 300 in a processing step are taken out as a bonded object 200. Meanwhile, in the taking-out step, the bonded object 200 may be automatically taken out by, for example, a robot hand, a robot arm, or the like or may be manually taken out.

<Bonded object>

The bonded object 200 in which the first and second base materials 210 and 220 are bonded to each other by the adhesive 300 includes the adhesive 300 that bonds to at least a part of the surface 210a of the first base material 210 and the surface 220a of the second base material 220. Further, in the bonded object 200, the first base material 210 includes the protrusion 212 that is deformed to protrude toward the surface 210b opposite to the surface 210a together with the adhesive 300. And/or, the second base material 220 includes the protrusion 222 that is deformed to protrude toward the surface 220b opposite to the surface 220a together with the adhesive 300.

<Effects>

As described above, in the bonding method according to the first embodiment, the adhesive 300 flows when pressurized by the first and second molds 110 and 120 in a second step. The protrusion 212 that is deformed by the flow of the adhesive 300 in the recess 114 to protrude toward the recess 114 is formed on the first base material 210. The protrusion 222 that is deformed by the flow of the adhesive 300 in the recess 124 to protrude toward the recess 124 is formed on the second base material 220.

Due to the bonding method that uses the pressurizing apparatus 100 of the first embodiment, grooving or drawing is not required for the first base material 210 and the second base material. Since the adhesive reservoir 310 is formed at the bonding portion between the first and second base materials 210 and 220, a sufficient amount of the adhesive 300 can be ensured. As a result, the first and second base materials 210 and 220 having been bonded to each other are less likely to peel off against a shear force. Here, the direction of the shear force is the direction of arrows Sr1 and Sr2 shown in Fig. 1D by a solid line (or arrows Sr3 and Sr4 shown by a broken line).

Further, the first and second base materials 210 and 220 are deformed by the flow of the adhesive 300. For this reason, the first and second base materials 210 and 220 can be deformed according to the amount of the adhesive 300 as long as being within a deformation limit. The extents to which the protrusion 212 of the first base material 210 and the protrusion 222 of the second base material 220 protrude are small in a case where the amount of the adhesive 300 confined inside is small, and are large in a case where the amount of the adhesive 300 confined inside is large. For this reason, the strict control of the amount of adhesive as in the related art becomes unnecessary.

As described above, according to the first embodiment, it is possible to provide a bonding method and a bonded object that can reduce man-hours during bonding and reduce the squeeze-out of an adhesive without requiring strict control of the amount of adhesive or a load to improve bonding strength.

Meanwhile, examples in which the adhesive flows due to pressurization and the base materials are deformed have been described in the first embodiment. However, the present invention is not limited to these examples. For example, in a case where the adhesive is hard and has low fluidity, the base materials are deformed during pressurization due to the presence of the adhesive even if the flow of the adhesive caused by pressurization is small. Further, a thermoplastic adhesive (hot melt) or a thermosetting adhesive (for example, an epoxy adhesive) is required to be simultaneously pressurized and heated. At this time, the base materials are deformed by not only the flow of the adhesive caused by pressurization but also the thermal expansion of the adhesive. In this case, when the width W1 and the height H1 are appropriately set in consideration of an expanded volume, the adhesive 300 does not squeeze out into a portion not requiring the adhesive 300 likewise. The same applies to the following embodiments. That is, the adhesive also includes adhesives having low fluidity, adhesives of which the volume changes due to expansion, and adhesives of which the volume does not change (a non-expanding adhesive and an incompressible adhesive). That is, the present invention includes a first base material 210, a second base material 220, and an adhesive 300 that will be described below. A protrusion 212 that is deformed due to the adhesive 300 in the recess 114 to protrude toward the recess 114 is formed on the first base material 210. A protrusion 222 that is deformed due to the adhesive 300 in the recess 124 to protrude toward the recess 124 is formed on the second base material 220. Then, a void formed by the protrusions 212 and 222 is filled with the adhesive 300.

[Second embodiment]

Both the first and second molds 110 and 120 have a recessed shape in the above-described first embodiment, but only one of two molds has a recessed shape (recess) in a second embodiment. Figs. 4A to 4D are schematic diagrams showing a bonding method for a base material according to the second embodiment. Fig. 4A is a schematic diagram showing an application step of applying an adhesive to a first base material. Fig. 4B is a schematic diagram showing a pressurizing apparatus that bonds the first base material and a second base material. Fig. 4C is a schematic diagram showing an aspect in which the first and second base materials are pressurized and held by first and second molds. Fig. 4D is a schematic diagram showing an aspect in which the bonded first and second base materials are taken out.

<Mold>

A pressurizing apparatus 100 of a second embodiment includes a first mold 110A and a second mold 120. The first mold 110A does not include a recessed portion on a surface 112A thereof. Since the second mold 120 is the same as that of the first embodiment, the description thereof will be omitted. The first mold 110A of the second embodiment does not include a recess. That is, the pressurizing apparatus 100 of the second embodiment includes a recess 124 only on one mold (second mold 120). Meanwhile, since the configuration of the recess 124 is the same as that in the first embodiment, the description thereof will be omitted.

<Pressurizing step>

Since the application step shown in Fig. 4A and the setting step shown in Fig. 4B are the same as those shown in Figs. 1A and 1B, the description thereof will be omitted. A pressurizing step of the second embodiment will be described. Here, as shown in Fig. 4C, first and second base materials 210 and 220 include portions C1 and C2 that are to be pressurized by the first and second molds 110A and 120 and are shown by a broken line and a portion D1 that is not to be pressurized due to the recess 124 and is shown by a broken line. The portion D1 is positioned in advance such that a portion to which the adhesive 300 has been applied is positioned at the portion D1, and is in a state where the adhesive 300 is interposed between the first and second base materials 210 and 220. Meanwhile, at the portion D1, a side of the first base material 210 or the second base material 220 on which the adhesive 300 is present refers to an inner side, and a side of the first base material 210 or the second base material 220 on which the adhesive 300 is not present refers to an outer side.

Since the portion D1 is not in contact with the first and second molds 110A and 120, the flow of the adhesive 300 in the portion D1 in an upward direction in the plane of paper caused by pressurization is not obstructed. On the other hand, since the portions C1 and C2 that have been pressurized are present, the flow of the adhesive in a horizontal direction in the plane of paper is constrained. Only the second base material 220, which is positioned on a side where the recess 124 is provided, is deformed by the flow of the adhesive 300, which is accompanied by anisotropy, at at least a part of the portion D1 and forms a protrusion 222 that protrudes toward the outer side. Meanwhile, since a relationship between W1, W2, H1, and H2 is also the same as that in the first embodiment, the description thereof will be omitted.

(Taking-out step)

As shown in Fig. 4D, the first and second base materials 210 and 220 bonded to each other by the adhesive 300 in a processing step are taken out as a bonded object 200A. The bonded object 200A is the same as that in the first embodiment except that only the second base material 220 is deformed.

<Effects>

Even though the bonding method using the pressurizing apparatus 100 of the second embodiment in which only one mold is provided with the recess is used, grooving or drawing is not required for the first base material 210 and the second base material. Since the adhesive reservoir 310 is formed, a sufficient amount of the adhesive 300 can be ensured. As a result, the first and second base materials 210 and 220 having been bonded to each other are less likely to peel off against a shear force. Since the shear force is also the same as that in first embodiment as shown in Fig. 4D, the description thereof will be omitted.

Further, only the second base material 220 is deformed by the flow of the adhesive 300 in the second embodiment. Even in this case, the second base material 220 can be deformed according to the amount of the adhesive 300 as long as being within a deformation limit. The extent to which the protrusion 222 of the second base material 220 protrudes is small in a case where the amount of the adhesive 300 confined inside is small, and is large in a case where the amount of the adhesive 300 confined inside is large. For this reason, the strict control of the amount of adhesive as in the related art becomes unnecessary.

Meanwhile, in contrast to Figs. 4A to 4D, the first mold 110 may be provided with a recess 114 and the second mold 120 may not be provided with a recess. In this case, the first base material 210 is deformed by the flow of the adhesive 300 during pressurization, so that a protrusion 212 is formed, and the second base material 220 is not deformed. Even in this case, the same effects as the above-described effects are obtained.

As described above, according to the second embodiment, it is possible to provide a bonding method and a bonded object that can reduce man-hours during bonding and reduce the squeeze-out of an adhesive without requiring strict control of the amount of adhesive or a load to improve bonding strength.

[Third embodiment]

In the first and second embodiments, two base materials are bonded to each other by an adhesive. However, in the case of certain materials of the base materials, it also may be difficult to bond the base materials using the adhesive due to poor compatibility between the base materials and the adhesive. A method using a binder that can bond two base materials even in such a case will be described in a third embodiment. Further, a step of applying an adhesive to a first base material 210 to bond the first base material 210 and a binder and applying an adhesive to a second base material 220 to bond the second base material 220 and a binder is provided before an application step in the third embodiment. The flow of the adhesive and the deformation of the base material are used in the above-described embodiments, but the flow of the binder and the deformation of the base material are used in the third embodiment.

<Binder>

Figs. 5A to 5E are schematic diagrams showing a bonding method for a base material according to the third embodiment. Fig. 5A is a schematic diagram showing a first application step of applying an adhesive to base materials, and Fig. 5B is a schematic diagram showing a second application step of applying a binder to the base material. Fig. 5C is a schematic diagram showing a pressurizing apparatus that bonds the two base materials, Fig. 5D is a schematic diagram showing an aspect in which the two base materials are pressurized and held by molds, and Fig. 5E is a schematic diagram showing an aspect in which the bonded base materials are taken out.

For example, a resin, rubber, or the like is used as a binder 360 as a first adhesive. Further, the binder 360 is applied by an application apparatus 500. As shown in Fig. 5B, the second application step is performed using the application apparatus 500. The application apparatus 500 includes a nozzle 510 and a table 520. The nozzle 510 discharges the binder 360, which is stored in the application apparatus 500, downward. The table 520 holds the first base material 210 that has been positioned. The first base material 210 is accurately positioned and placed on the table 520 so that bonding is accurately performed at a predetermined position.

The nozzle 510 discharges the binder 360 onto a surface 210a of the first base material 210 positioned on the table 520. Meanwhile, the application apparatus 500 may be configured such that any one or both of the nozzle 510 and the table 520 are movable in a horizontal plane. Accordingly, required lines are drawn on the first and second base materials 210 and 220 with the binder 360 so that protrusions 212 and 222 shown in Fig. 6B can be formed. Meanwhile, the application apparatus 500 shown in Fig. 5B is merely an example, and an application method for the binder 360 may be performed using, for example, a spray gun, a dispenser, a coater, a printer, injection forming using a mold, or the like. For example, the placement of a hot-melt binder processed into a sheet or film form or a film including a binder formed on both surfaces thereof may be performed, or a placement step may be provided instead of the application step as in the first embodiment. That is, the first application step and/or the second application step to be described later may be a first placement step and/or second placement step.

<Bonding method>

The bonding method according to the third embodiment is performed by the application apparatus 400, the application apparatus 500, and the pressurizing apparatus 100, and includes a first application step, a second application step, a setting step, a pressurizing step, and a taking-out step.

(First application step)

In the third embodiment, an adhesive 300, which is a second adhesive, is uniformly applied onto the surface 210a of the first base material 210 and the surface 220a of the second base material 220 by the application apparatus 400.

Meanwhile, the adhesive 300 is uniformly applied to both the first and second base materials 210 and 220 in the third embodiment, but may be applied to only one of the first and second base materials 210 and 220. Further, the adhesive 300 is applied even to portions other than portions of the first and second base materials 210 and 220, to which the binder 360 is to be applied, in the first application step, but may be applied to a part of the first and second base materials 210 and 220 including the portions to which the binder 360 is to be applied. Furthermore, the binder 360 may be directly applied to the first and second base materials 210 and 220 in a state where the first application step is not performed, that is, the adhesive 300 is not applied to both the first and second base materials 210 and 220.

(Second application step)

In the third embodiment, the same step as the application steps shown in Figs. 1A and 4A is performed in the second application step. Here, in the third embodiment, the binder 360 is applied to the surface 210a of the first base material 210, to which the adhesive 300 has been applied, by the application apparatus 500. Since the adhesive 300 has been applied to the first and second base materials 210 and 220 in advance, the bonding of the binder 360 can be made more firmly.

(Pressurizing step)

Since the setting step shown in Fig. 5C is the same as those shown in Figs. 1B and 4B, the description thereof will be omitted. Further, since the pressurizing step shown in Fig. 5D is also the same as those of the first and second embodiments except that the adhesive 300 is uniformly applied to both the first and second base materials 210 and 220 and the adhesive 300 of the first and second embodiments is substituted with the binder 360, the description thereof will be omitted.

As shown in Fig. 5D, in the third embodiment, a protrusion 212 is formed on the first base material 210 and a protrusion 222 is formed on the second base material 220 by the flow of the binder 360. Since the protrusions 212 and 222 are filled with the binder 360, the protrusions 212 and 222 serves as a binder reservoir 370. Meanwhile, since the taking-out step of taking out a bonded object 200B, which is shown in Fig. 5E, is the same as those shown in Figs. 1D and 4D, the description thereof will be omitted.

Meanwhile, even in a case where the binder 360 is used, only one of the molds may be provided with a recess and bonding may be performed as in the second embodiment.

Even in the third embodiment, the same effects as those of the first and second embodiments can be obtained. In addition, since a binder, such as a resin or rubber, is used as the adhesive, the options for materials used for the base materials can be increased.

As described above, according to the third embodiment, it is possible to provide a bonding method and a bonded object that can reduce man-hours during bonding and reduce the squeeze-out of an adhesive without requiring strict control of the amount of adhesive or a load to improve bonding strength.

[Fourth embodiment]

The molds that are used to bond two base materials with the adhesive or the binder have been described in the first, second, and third embodiments. The bonding of the two base materials may be performed together with a step of molding seal members, which are made of rubber or the like, on the base materials. That is, molds, which are used to mold the seal members, may be provided with recesses 114 and 124 that are used to form protrusions on the first and second base materials 210 and 220 with the flow of the adhesive or the binder. In a fourth embodiment, in a processing step, a seal member is molded on a surface 210b of the first base material 210 opposite to a surface 210a and/or a seal member is molded on a surface 220b of the second base material 220 opposite to a surface 220a.

<Seal member and bonding portion>

Fig. 6A is an enlarged view of a bonding portion at which the base materials are bonded to each other by the bonding method according to the third embodiment, Fig. 6B is a schematic diagram showing a molded article in a case where the bonding of the two base materials is performed together with the processing of the seal members, and Fig. 6C is a cross-sectional view taken along line E-E of Fig. 6B. As shown in Fig. 6A, the protrusions 212 and 222 are formed on the first and second base materials 210 and 220 by the flow of the binder 360 and the binder reservoir 370 is formed in the protrusions 212 and 222 even in a case where the bonding is performed together with the processing of the seal members. Accordingly, the first and second base materials 210 and 220 are firmly bonded to each other.

Fig. 6B is a diagram showing a molded article 700 on which the molding of the seal members 600 has ended, as viewed from the second base material 220. In the molded article 700, the seal member 600 is molded on the surface 220b of the second base material 220, the first and second base materials 210 and 220 are bonded to each other by the binder 360, and a protrusion 222 is formed on the surface 220b of the second base material 220 to draw a line suitable for the shape of the seal member 600. Meanwhile, a hole portion 228 is also provided in the first and second base materials 210 and 220. As described above, the first and second base materials 210 and 220 may be provided with the hole portion 228, a notch, or the like according to a use, and the placement and shapes of the seal members molded on the surfaces 210b and 220b can also be freely designed. Further, a bonding portion, in other words, the protrusions 212 and 222 can also be provided with shapes corresponding to the use or the like of the molded article 700 and at positions corresponding thereto.

Fig. 6C is a cross-sectional view taken along line E-E of Fig. 6B. The first base material 210 is deformed by the flow of the binder 360, so that the protrusion 212 is formed, and the second base material 220 is deformed, so that the protrusion 222 is formed. Since the binder reservoir 370 is present in the protrusions 212 and 222 via the adhesive 300, the bonding of the first and second base materials 210 and 220 is made firm.

Further, the seal members 600 are molded on the right side of the bonding portion. In more detail, the seal member 600A1 is molded on the first base material 210 and the seal member 600A2 is molded on the second base material 220. Meanwhile, an example in which the seal members are molded has been described in Figs. A to 6C together with the bonding method described in the third embodiment, but the seal members may be molded together with the bonding methods described in the first and second embodiments.

As described above, according to the fourth embodiment, it is possible to provide a bonding method and a bonded object that can reduce man-hours during bonding and reduce the squeeze-out of an adhesive without requiring strict control of the amount of adhesive or a load to improve bonding strength.

[Other embodiments]

Although the two base materials have been base materials formed of the same material in the first to fourth embodiments, the two base materials may be base materials formed of different materials and may be bonded to each other by the bonding method according to the above-described embodiment. Even though the same adhesive or binder is used, the extent to which the base material is deformed by the flow of the adhesive or the binder differs in a case where the material of the base material differs. For this reason, with regard to the widths W1 and the heights H1 of the recesses of the molds, the recess 114 of the first mold 110 and the recess 124 of the second mold 120 may be set to sizes corresponding to the sizes of the protrusions to be formed on the respective base materials.

Although the preferred embodiments of the present invention have been described above, the present invention is not limited thereto and various modifications and changes can be made without departing from the scope of the present invention.

Further, for example, the present invention includes the following aspects.

[Aspect 1]

A bonding method of interposing an adhesive between a first bonding surface of a first base material and a second bonding surface of a second base material and interposing and pressurizing the first base material and the second base material between a first mold and a second mold facing the first mold to bond the first base material and the second base material, the first mold including a first recess, and the second mold including a second recess at a position facing the first recess, the bonding method comprising:

a first step of applying, forming, or placing the adhesive on the first bonding surface or the second bonding surface; and

a second step of setting the first base material on the first mold and setting the second base material on the second mold such that a portion on which the adhesive has been applied, formed, or placed is positioned at the first recess and the second recess and pressurizing the first base material and the second base material with the first mold and the second mold,

wherein the first base material is deformed due to the adhesive in the first recess to form a first protrusion protruding toward the first recess,

the second base material is deformed due to the adhesive in the second recess to form a second protrusion protruding toward the second recess, and a void formed by the first protrusion and the second protrusion is filled with the adhesive.

[Aspect 2]

A bonding method of interposing an adhesive between a first bonding surface of a first base material and a second bonding surface of a second base material and interposing and pressurizing the first base material and the second base material between a first mold and a second mold facing the first mold to bond the first base material and the second base material, the first mold including a recess, the bonding method comprising:

a first step of applying, forming, or placing the adhesive on the first bonding surface or the second bonding surface; and

a second step of setting the first base material on the first mold and setting the second base material on the second mold such that a portion on which the adhesive has been applied, formed, or placed is positioned at the recess and pressurizing the first base material and the second base material with the first mold and the second mold,

wherein the first base material is deformed due to the adhesive in the recess to form a protrusion protruding toward the recess, and

a void formed by the protrusion is filled with the adhesive.

[Aspect 3]

The adhesive may include rubber or a resin.

[Aspect 4]

The bonding method according to claim 3 comprising:
when the adhesive is defined as a first adhesive, a step of applying, forming, or placing a second adhesive on the first base material to bond the first base material and the first adhesive and/or applying, forming, or placing the second adhesive on the second base material to bond the second base material and the first adhesive, before the first step.

[Aspect 5]

In the second step, a seal member may be molded on a surface of the first base material opposite to the first bonding surface and/or a seal member may be molded on a surface of the second base material opposite to the second bonding surface by the first mold and the second mold.

[Aspect 6]

A bonded object comprising:

a first base material including a first bonding surface;
a second base material including a second bonding surface; and

an adhesive that bonds the first bonding surface and the second bonding surface at least partially,

wherein the first base material includes a first protrusion that is deformed due to the adhesive to protrude from a surface of the first base material opposite to the first bonding surface, and/or

the second base material includes a second protrusion that is deformed due to the adhesive to protrude from a surface of the second base material opposite to the second bonding surface, and

a void formed by the first protrusion and/or the second protrusion is filled with the adhesive.

REFERENCE SIGNS LIST

100: pressurizing apparatus
110, 110A: first mold
112: surface
114: recess
114Sp: space
114a: bottom surface
114b: wall surface

114c: wall surface
120: second mold
122: surface
124: recess
124Sp: space
124a: bottom surface
124b: wall surface
124c: wall surface
200, 200A: bonded object
210: first base material
210a, 210b: surface
212: protrusion
220: second base material
220a, 220b: surface
222: protrusion
228: hole portion
300: adhesive 301: adhesive or binder
310: adhesive reservoir
360: binder
400: application apparatus
410: nozzle
420: table
450: forming apparatus
450A, 450B, 450C: mold
450Ba: gate
450Bb: recess
500: application apparatus
510: nozzle
520: table
600, 600A1, 600A2: seal member
700: molded article
A1, A2, B1, C1, C2, D1: portion
Sr1, Sr2, Sr3, Sr4: arrow
W1, W2: width
H1, H2: height

**Claims**

1. A bonding method of interposing an adhesive between a first bonding surface of a first base material and a second bonding surface of a second base material and interposing and pressurizing the first base material and the second base material between a first mold and a second mold facing the first mold to bond the first base material and the second base material, the first mold including a first recess, and the second mold including a second recess at a position facing the first recess, the bonding method comprising:

   a first step of applying, forming, or placing the adhesive on the first bonding surface or the second bonding surface; and
   a second step of setting the first base material on the first mold and setting the second base material on the second mold such that a portion on which the adhesive has been applied, formed, or placed is positioned at the first recess and the second recess and pressurizing the first base material and the second base material with the first mold and the second mold,
   wherein the first base material is deformed due to the adhesive in the first recess to form a first protrusion protruding toward the first recess,
   the second base material is deformed due to the adhesive in the second recess to form a second protrusion protruding toward the second recess, and
   a void formed by the first protrusion and the second protrusion is filled with the adhesive.

2. A bonding method of interposing an adhesive between a first bonding surface of a first base material and a second bonding surface of a second base material and interposing and pressurizing the first base material and the second base material between a first mold and a second mold facing the first mold to bond the first base material and the second base material, the first mold including a recess, the bonding method comprising:

   a first step of applying, forming, or placing the adhesive on the first bonding surface or the second bonding surface; and
   a second step of setting the first base material on the first mold and setting the second base material on the second mold such that a portion on which the adhesive has been applied, formed, or placed is positioned at the recess and pressurizing the first base material and the second base material with the first mold and the second mold,
   wherein the first base material is deformed due to the adhesive in the recess to form a protrusion protruding toward the recess, and
   a void formed by the protrusion is filled with the adhesive.

3. The bonding method according to claim 1 or 2, wherein the adhesive includes rubber or a resin.

4. The bonding method according to claim 3 comprising:
   when the adhesive is defined as a first adhesive, a step of applying, forming, or placing a second adhesive on the first base material to bond the first base material and the first adhesive and/or applying, forming, or placing the second adhesive on the second base material to bond the second base material and the first adhesive, before the first step.

5. The bonding method according to claim 1 or 2, wherein, in the second step, a seal member is molded on a surface of the first base material opposite to the first bonding surface and/or a seal member is molded on a surface of the second base material opposite to the second bonding surface by the first mold and the second mold.

6.  A bonded object comprising:

    a first base material including a first bonding surface;
    a second base material including a second bonding surface; and
    an adhesive that bonds the first bonding surface and the second bonding surface at least partially,
    wherein the first base material includes a first protrusion that is deformed due to the adhesive to protrude from a surface of the first base material opposite to the first bonding surface, and/or
    the second base material includes a second protrusion that is deformed due to the adhesive to protrude from a surface of the second base material opposite to the second bonding surface, and
    a void formed by the first protrusion and/or the second protrusion is filled with the adhesive.

FIG. 1

**FIG. 2**

(a)  (b)  (c)  (d)

FIG. 3

**FIG. 4**

(a)

210a
300
410(400)
210
420(400)

(b)

124
124Sp
120(100)
122
124c 124a 124b
220
220b
220a
210
300
210a
210b
112A
110A(100)

(c)

310(300)
222
124
220
120(100)
210
110A(100)
C2 D1 C1

(d)

310(300)
222
200A
220
Sr1 Sr3
210
220b
210b
Sr2 Sr4

**FIG. 5**

**FIG. 6**

(a)

(b)

(c)

## INTERNATIONAL SEARCH REPORT

| International application No. |
|---|
| **PCT/JP2023/033848** |

**A.    CLASSIFICATION OF SUBJECT MATTER**

*B29C 39/10*(2006.01)i; *B29C 69/00*(2006.01)i; *B29C 65/52*(2006.01)i
FI:    B29C69/00; B29C65/52; B29C39/10

According to International Patent Classification (IPC) or to both national classification and IPC

**B.    FIELDS SEARCHED**

Minimum documentation searched (classification system followed by classification symbols)

B29C39/00-39/44; B29C69/00; B29C65/00-65/82; B32B1/00-43/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 53-139686 A (DAIKEN KOGYO KK) 06 December 1978 (1978-12-06) p. 2, upper right column, line 7 to p. 2, lower left column, line 20 | 6 |
| A | | 1-5 |
| A | JP 61-2558 A (KASAI KOGYO CO., LTD.) 08 January 1986 (1986-01-08) entire text | 1-6 |

☐ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 November 2023** | **14 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/033848**

| Patent document cited in search report | | | Publication date (day/month/year) | Patent family member(s) | Publication date (day/month/year) |
|---|---|---|---|---|---|
| JP | 53-139686 | A | 06 December 1978 | (Family: none) | |
| JP | 61-2558 | A | 08 January 1986 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002347123 A